# FASCICULE DE BREVET EUROPEEN

(11) **EP 0 527 077 B1**
(45) Date de publication et mention de la délivrance du brevet: **19.01.1994**
(21) Numéro de dépôt: 92402139.7
(22) Date de dépôt: 23.07.1992
(51) Int. Cl.: B01J 19/12, C22B 9/22, C04B 18/04, C04B 35/64, A62D 3/00

(54) **Procédé de traitement de résidus fortement polluants pour l'environnement**
Verfahren zur Behandlung stark umweltschädlicher Abfallstoffe
Method for treating environmentally strongly polluting wastes

(30) Priorité: 07.08.1991 FR 9110073
(43) Date de publication de la demande: 10.02.1993
(73) Titulaire: SOLLAC, 92800 Puteaux (FR)
(72) Inventeur: Schneider, Michel, F-59240 Dunkerque (FR); Masson, Gérard, F-59240 Dunkerque (FR); Bescher, Eric, F-56520 Guidel (FR)
(74) Mandataire: Lanceplaine, Jean-Claude

(56) Documents cités:
- FR-A- 2 218 389
- FR-A- 2 477 181
- GB-A- 2 081 060
- US-A- 4 963 709

## Description

La présente invention a pour objet un procédé de traitement de résidus fortement polluants par l'eau pour l'environnement, comme par exemple les résidus de filtrations à sec ou humide.

Les résidus fortement polluants visés par le procédé de traitement selon la présente demande, sont notamment les boues d'élaboration de métaux, les boues de décanteur d'usines mécaniques ou sidérurgiques, les boues de réseaux d'usines ou de réseaux urbains ou encore les fines issues de filtrations à sec ou humide des fumées de centrales à charbon ou d'usines d'incinération.

Ce type de résidus contient des produits particulièrement dangereux pour l'environnement.

En effet des tests de lixiviation effectués sur ces résidus révèlent qu'ils contiennent des produits tels que du zinc, du plomb ou du cadmium qui sont fortement polluants pour la nappe phréatique lorsque ces résidus sont en contact avec l'eau.

Jusqu'à présent, plusieurs méthodes sont utilisées pour traiter ces résidus qui consistent, soit à effectuer une calcination des résidus à une température de l'ordre de 1500°C, soit à ensacher les résidus pour les stocker dans une enveloppe hermétique ou à absorber lesdits résidus par des résines pour éviter le contact avec l'eau et l'air.

Mais ces différentes méthodes ne sont pas économiquement rentables car, dans un cas elles nécessitent une consommation d'énergie importante et dans l'autre cas, elles font appel à des produits nobles et coûteux du type résine, colle ou ensachages spéciaux.

La présente invention a pour but de proposer un procédé de traitement qui évite les inconvénients mentionnés ci-dessus.

La présente invention a donc pour objet un procédé de traitement de résidus fortement polluants pour l'environnement, comme par exemple les résidus issus de filtrations à sec ou humide, caractérisé en ce qu'il consiste :
- à mélanger les résidus à un produit contenant de l'oxyde de fer,
- à placer ledit mélange dans un creuset,
- à protéger ledit creuset par des fibres isolantes,
- à placer le creuset protégé par lesdites fibres isolantes dans un four à micro-ondes,
- et à exposer aux micro-ondes ledit mélange pendant une durée comprise entre 2 à 15 minutes à une température comprise entre 1000°C et 1300 °C pour réaliser une fusion sèche dudit mélange et obtenir un matériau solide.

Selon d'autres caractéristiques de l'invention :
- le produit mélangé aux résidus contient 10 à 40% d'oxyde de fer,
- le produit mélangé aux résidus est formé par de la magnétite ou par des boues sidérurgiques,
- la température d'exposition aux micro-ondes dudit mélange est de préférence égale à 1100°C,
- les fibres isolantes sont formées par des fibres d'alumino-silicate,
- le four à micro-ondes fonctionne à 2,45 GHz et à une puissance de 700 W.

Le procédé de traitement mentionné ci-dessus trouve plus particulièrement son application dans la revalorisation des boues de sidérurgie.

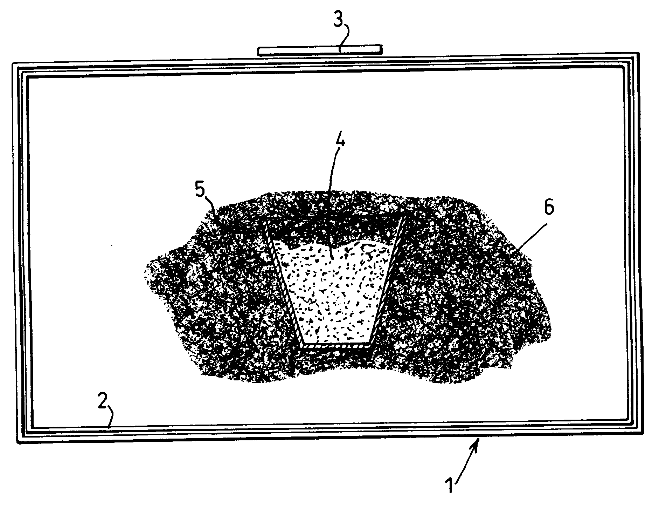

D'autres caractéristiques et avantages de l'invention apparaîtront à la lecture de la description qui va suivre donnée uniquement à titre d'exemple et faite en référence à la figure unique annexée qui représente un schéma d'un four à micro-ondes pour la mise en oeuvre du procédé de traitement selon la présente invention.

Sur la figure, on a représenté schématiquement un four à micro-ondes 1 qui comporte de manière classique, une cavité multimode et un générateur 3 d'ondes hyper fréquence.

Ce four à micro-ondes fonctionne par exemple à 2,45 GHz et a une puissance de 700W.

Le procédé selon la présente invention consiste à traiter des résidus fortement polluants pour l'eau et l'environnement, comme par exemple les résidus de filtrations à sec ou humide.

Ces résidus sont notamment les boues d'élaboration de métaux et cuivre, aluminium, zinc, les boues de décanteur d'usines mécaniques ou sidérurgiques, les boues de réseaux d'usines ou de réseaux urbains ou encore les fines issues de filtrations à sec ou humide des fumées de centrales à charbon ou d'usines d'incinération.

Le procédé de traitement consiste tout d'abord à mélanger les résidus fortement polluants avec un produit contenant de l'oxyde de fer, notamment dans une proportion comprise entre 10 et 40%.

Ce produit est formé par exemple par de la magnétite ou des boues sidérurgiques.

Le mélange 4 ainsi obtenu est placé dans un creuset 5 et ce creuset 5 contenant ledit mélange 4 est protégé par des fibres isolantes 6, comme par exemple des fibres d'alumino-silicate.

Ensuite, le creuset 5 et le mélange 4 protégés par les fibres isolantes 6 sont placés dans le four à micro-ondes 1 et le mélange 4 est exposé au micro-ondes pendant une durée comprise entre 2 à 15 minutes à une température comprise entre 1000 et 1300°C et de préférence égale à 1100°C pour réaliser une fusion sèche dudit mélange et obtenir un matériau solide.

Tout autre protection du creuset et du mélange peut également être utilisé.

Au cours de l'exposition du mélange dans le four à micro-ondes, l'absorption des micro-ondes effectue le collage des différents constituants et le fer contenu sous forme d'oxyde de fer dans l'un des constituants sert de liant sec à 1100°C de l'ensemble des constituants.

Des tests lixiviation ont été effectués sur le matériau obtenu et ces tests montrent que ce matériau est mille fois moins dangereux que les résidus bruts.

Le matériau obtenu peut se présenter sous une forme du type agrégat ou de tuile et l'utilisation de ce matériau est conforme aux normes de pollution en vigueur à ce jour.

Ce procédé de traitement trouve particulièrement sont application dans la revalorisation des boues de sidérurgie en utilisant leur propriété chauffante en passage au four à micro-ondes.

De plus, la fusion sèche est réalisée entre 1000°C et 1300°C au lieu des 1500°C nécessaires pour la calcination classique d'où un gain notoire d'énergie.

Une autre application de ce procédé de traitement est le mélange des cendres d'usines d'incinération avec les boues de sidérurgie qui permet la fabrication de tuiles.

Ainsi, l'utilisation de deux déchets inutilisables permet d'obtenir un produit correct pour l'environnement et surtout valorisable.

D'une manière générale, le matériau obtenu par le procédé selon la présente invention possède des propriétés mécaniques particulièrement intéressantes ce qui permet toute une série d'applications pour son utilisation par exemple en technique routière, en bâtiment et en travaux publics.

Enfin, le procédé selon la présente invention permet un gain d'énergie et évite l'emploi de produits nobles du type résine, colle ou ensachages spéciaux.

## Revendications

1. Procédé de traitement de résidus fortement polluants pour l'environnement, comme par exemple les résidus issus de filtrations à sec ou humide, caractérisé en ce qu'il consiste :
- à mélanger les résidus à un produit contenant de l'oxyde de fer,
- à placer ledit mélange dans un creuset (5),
- à protéger ledit creuset (5) par des fibres isolantes (6),
- à placer le creuset (5) protégé par les fibres isolantes (6) dans un four à micro-ondes (1),
- à exposer aux micro-ondes ledit mélange pendant une durée comprise entre 2 à 15 minutes à une température comprise entre 1000°C et 1300°C pour réaliser une fusion sèche dudit mélange et obtenir un matériau solide.

2. Procédé selon la revendication 1, caractérisé en ce que le produit mélangé aux résidus contient 10 à 40% d'oxyde de fer.

3. Procédé selon les revendications 1 et 2, caractérisé en ce que le produit mélangé aux résidus est formé par de la magnétite.

4. Procédé selon les revendications 1 et 2, caractérisé en ce que le produit mélangé aux résidus est formé par des boues sidérurgiques.

5. Procédé selon la revendication 1, caractère en ce que la température d'exposition aux micro-ondes dudit mélange est égale à 1100°C.

6. Procédé selon la revendication 1, caractérisé en ce que les fibres isolantes sont formées par des fibres d'alumino-silicate.

7. Procédé selon la revendication 1, caractérisé en ce que le four à micro-ondes (1) fonctionne à 2,45 GHz et a une puissance de 700 W.

8. Application du procédé de traitement selon l'une quelconque des revendications précédentes à la revalorisation des boues de sidérurgie.

## Claims

1. Process for treating highly environmentally polluting residues, such as for example residues resulting from dry or wet filtration, characterised in that it consists of:
- mixing the residues with a product containing iron oxide,
- placing the said mixture in a crucible (5),
- protecting the said crucible (5) by insulating fibres (6),
- placing the crucible (5) protected by the insulated fibres (6) in a microwave oven (1),
- exposing the said mixture to microwaves for a period of between 2 to 15 minutes at a temperature of between 1000 °C and 1300 °C in order to produce a dry fusion of the said mixture and to obtain a solid material.

2. Process according to Claim 1, characterised in that the product mixed with the residues contains 10 to 40 % of iron oxide.

3. Process according to Claims 1 and 2, characterised in that the product mixed with the residues is formed by magnetite.

4. Process according to Claims 1 and 2, characterised in that the product mixed with the residues is formed by sludge from the iron and steel industry.

5. Process according to Claim 1, characterised in that the temperature of exposure of the said mixture to microwaves is equal to 1100 °C.

6. Process according to Claim 1, characterised in that the insulating fibres are formed by alumino-silicate fibres.

7. Process according to Claim 1, characterised in that the microwave oven (1) operates at 2.45 GHz and at a power of 700 W.

8. Application of the treatment process according to any one of the preceding claims to the reclaiming of sludge from the iron and steel industry.

## Patentansprüche

1. Verfahren zur Behandlung stark umweltverschmutzender Rückstände, wie beispielsweise von von Trocken- oder Feuchtfiltrationen abgeleiteten Rückständen, dadurch gekennzeichnet, daß es in
- einem Mischen der Rückstände mit einem Eisenoxid enthaltenden Produkt,
- einem Anordnen des Gemischs in einem Tiegel (5),
- einem Abschirmen des Tiegels (5) mit isolierenden Fasern (6),
- einem Anordnen des mit den isolierenden Fasern (6) abgeschirmten Tiegels (5) in einem Mikrowellenofen (1),
- einem Bestrahlen des Gemisches mit den Mikrowellen während einer Zeitdauer zwischen 2 und 15 Minuten bei einer Temperatur zwischen 1000°C und 1300°C zur Durchführung einer Trockenfusion des Gemisches und Gewinnung eines festen Materials besteht.

2. Verfahren nach Anspruch 1, dadurch gekennzeichnet, daß das den Rückständen beigemischte Produkt 10 bis 40 % Eisenoxid enthält.

3. Verfahren nach den Ansprüchen 1 und 2, dadurch gekennzeichnet, daß das den Rückständen beigemischte Produkt durch Magnetit gebildet ist.

4. Verfahren nach den Ansprüchen 1 und 2, dadurch gekennzeichnet, daß das den Rückständen beigemischte Produkt durch Hüttenschlämme gebildet ist.

5. Verfahren nach Anspruch 1, dadurch gekennzeichnet, daß die Temperatur der Mikrowellenbestrahlung des Gemischs gleich 1100°C ist.

6. Verfahren nach Anspruch 1, dadurch gekennzeichnet, daß die isolierenden Fasern durch Aluminosilikatfasern gebildet sind.

7. Verfahren nach Anspruch 1, dadurch gekennzeichnet, daß der Mikrowellenofen (1) bei 2,45 GHz und einer Leistung von 700 W arbeitet.

8. Verwendung des Behandlungsverfahrens nach irgendeinem der vorstehenden Ansprüche zur Wiederaufwertung von Hüttenschlämmen.
